# EUROPEAN PATENT APPLICATION

(11) **EP 1 619 619 A1**
(43) Date of publication of application: **25.01.2006**
(21) Application number: 05076661.7
(22) Date of filing: 19.07.2005
(51) Int. Cl.: G06Q 10/00

(54) **Method, computer system and computer network for implementing a business application**

(30) Priority: 19.07.2004 EP 04016993
(71) Applicant: SAP AG, 69190 Walldorf (DE)
(72) Inventor: Wood, Eric, Menlo Park, CA 94025 (US); Beringer, Joerg, 60431 Frankfurt (DE)
(74) Representative: Winckels, Johannes Hubertus F.

(57) **Abstract**

A method for implementing a business application on a computer system, the computer system including:
a context repository in which at least two context templates are stored, each of the context templates representing a meta-model of a business situation;
an action repository in which at least two actions are stored having respective action definitions, the method including:
   instantiating a context, in response to the business situation, based on a context template stored in the context repository, such that the instantiated context is a model of the business situation;
   associating at least one action with the instantiated context;
   generating a user interface based on an interface template, wherein the interface provides the at least one action to a user, based on the instantiated context, wherein the at least one action adopts the instantiated context;
   in response to a user's selection of one of the at least one action, providing to the user a plurality of sub-actions the user may want to perform before completing the one action, and
   adding the plurality of sub-actions to the instantiated context, wherein the sub-actions adopt the instantiated context.

## Description

### FIELD AND BACKGROUND OF THE INVENTION

The invention relates to a method, a computer system and computer network for implementing a business application on a computer systemBusiness applications running on programmable devices, such as computers, are known. These prior art applications aid users of the applications performing their activities within an enterprise. For example, a business application may guide a user through steps of a certain business process in a certain order, e.g. hiring a new employee. It is known to implement a business application using a multiple of services. For different steps in this process the business application may then provide the user with one or more services at the user interface, such as filling in and submitting a form to a database (e.g. with the new employees name address etc), and ordering items (e.g. a workplace for the new employee etc).

In their daily job people use business applications to complete tasks including a plurality of sub-tasks to reach a particular goal. This may necessitate features and function spanning across an application's solution space, or even features and function from a second application, which may not be directly associated with the function last used. This creates a situation where users are forced to create a mental model of the application in their head so that they may plan the correct order in which to complete the sub-tasks, and have an intimate understanding where and how features required for the next sub-task can be accessed. Furthermore, a user's goal may necessitate functions that span across different applications.

A GOMS model (Goal, Operations, Methods, Selection model) is known. This model explains how a user breaks down their high level goals into sub-goals, and finally into actual actions or steps.

It has been found that there is a need to support multi-step user interaction within a stable work context. Non-integrated system ask the user to switch between disconnected application, other business applications may try to bundle related information and function together into one screen. However, coherent actions still preferably require short multi-step user interaction which has to be supported by the navigational behavior of the system without producing navigational overhead. For example, a user is forced to spend time in window management instead of doing the work. Further, the user may experience cognitive friction, for example, he may have to remember things, and remember the location in the application.

It is desirable to allow users to complete a task which may span across a plurality of applications without having to create a mental model of the application or applications. The present invention further addresses the problem of supporting multi-step contextual action with nested sub-goals.

### SUMMARY OF THE INVENTION

According to an aspect of the invention, there is provided a method for implementing a business application on a computer system, the computer system including:
a context repository in which at least two context templates are stored, each of the context templates representing a meta-model of a business situation;
an action repository in which at least two actions are stored having respective action definitions, the method including:
   instantiating a context, in response to the business situation, based on a context template stored in the context repository, such that the instantiated context is a model of the business situation;
   associating at least one action with the instantiated context;
   generating a user interface based on an interface template, wherein the interface provides the at least one action to a user, based on the instantiated context, wherein the at least one action adopts the instantiated context;
   in response to a user's selection of one of the at least one action, providing to the user a plurality of sub-actions the user may want to perform before completing the one action, and
   adding the plurality of sub-actions to the instantiated context, wherein the sub-actions adopt the instantiated context.

In this way, designers and developers of software are able to provide everything a user may potentially need in order to reach a goal from the user interface of a particular sub-task. Further, in this way, a multi-step contextual action with nested sub-goals is supported within a given context whereby additional context is incrementally added with each step.

In addition, the method requires less complex knowledge with respect to the technical details of the or each business application since a link to the end goal is provided. Any prerequisite (required or optional) transactions are provided only in the context of that goal-action, lowering the number of optinos to choose from and removing unnecessary clutter from the user interface.

According to a further aspect of the invention, there is provided a business application, including a computer program product with code portions representing at least one instantiated context which instantiated context represents a business situation, the code portions further representing at least one input/output interface for transferring data from the instantiated context to an associated action or vice versa, the code portions further representing the generation of a user interface based on an interface template, wherein the interface provides the associated action to a user, based on the instantiated context, wherein the at least one action adopts the instantiated context; the code portions further representing, in response to a user's selection of one of the at least one action, a provision to the user of a plurality of sub-actions the user may want to perform before completing the one associated action, and the code portions further representing the addition of the plurality of sub-actions to the instantiated context, wherein the sub-actions adopt the instantiated context, when the business application is running on a computer. In one embodiment, the sub-action is a prerequisite. A sub-action is provided as a possible action that a user may wish to or needs to complete before successfully completing the initial action (also referred to as goal).

According to a further aspect of the invention, there is provided a computer program product, including code portions for performing a method according to any one of claims 1-11 when running on a computer. According to a further aspect of the invention, there is provided a computer system according to claim 13.

According to a further aspect of the invention, there is provided a computer network according to claim 14.

Specific embodiments of the invention are set forth in the dependent claims.

### BRIEF DESCRIPTION OF THE DRAWINGS

Further details, aspects and embodiments of the invention will be described, by way of example only, with reference to the attached drawings.
Figure 1 shows a schematic drawing illustrating the different goals presented to a user in a work center according to an embodiment of the invention;
Figure 2 shows a schematic drawing illustrating actions a user may want to do before completing an end goal;
Figure 3 shows a schematic drawing illustrating a stack of actions;
Figure 4 shows a further illustration of a stack of actions;
Figure 5 schematically shows a block diagram of a computer system suitable for implementing a business application;
Figure 6 schematically shows an example of an action template context template, an action definition and a context instance;
Figure 7 schematically shows a first example of a context template linked to actions definitions;
Figure 8 schematically shows a second example of a context template linked to actions definitions;
Figure 9 schematically shows a third example of a context template linked to actions definitions and to a user interface template;
Figure 10 schematically shows a block diagram of a computer system provided with a business application according to the invention;
Figure 11 schematically shows a block diagram of a Graphical User Interface suitable for in the example of figure 9;
Figure 12 shows a schematic drawing illustrating the concept of an action;
Figure 13 shows a further schematic drawing illustrating an action gallery and its respective user interfaces in a work context;
Figure 14 shows an implementation of an action specific user interface, and
Figure 15 schematically shows a block diagram of a computer network provided with a business application according to the invention.

### DETAILED DESCRIPTION OF EMBODIMENTS

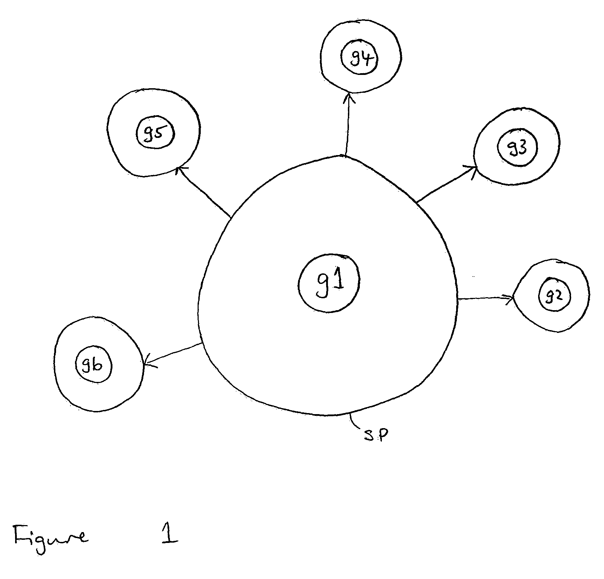

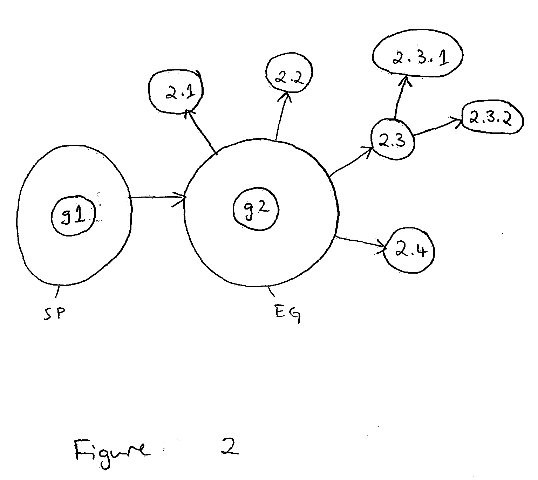

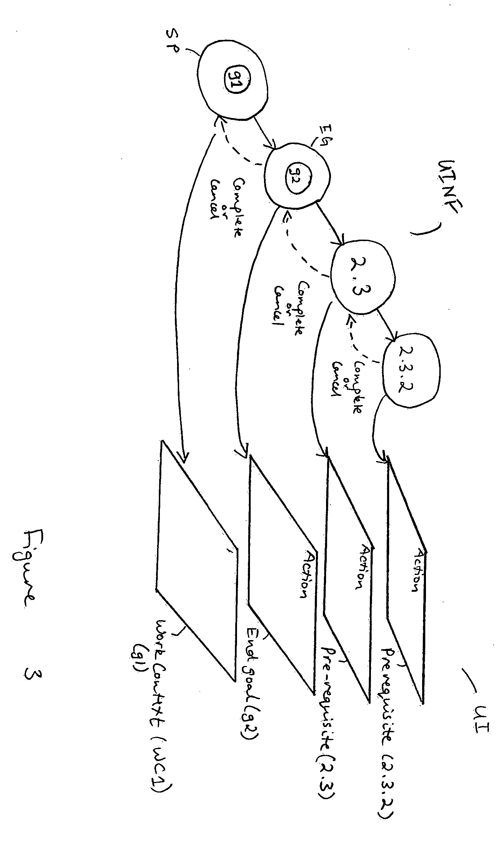

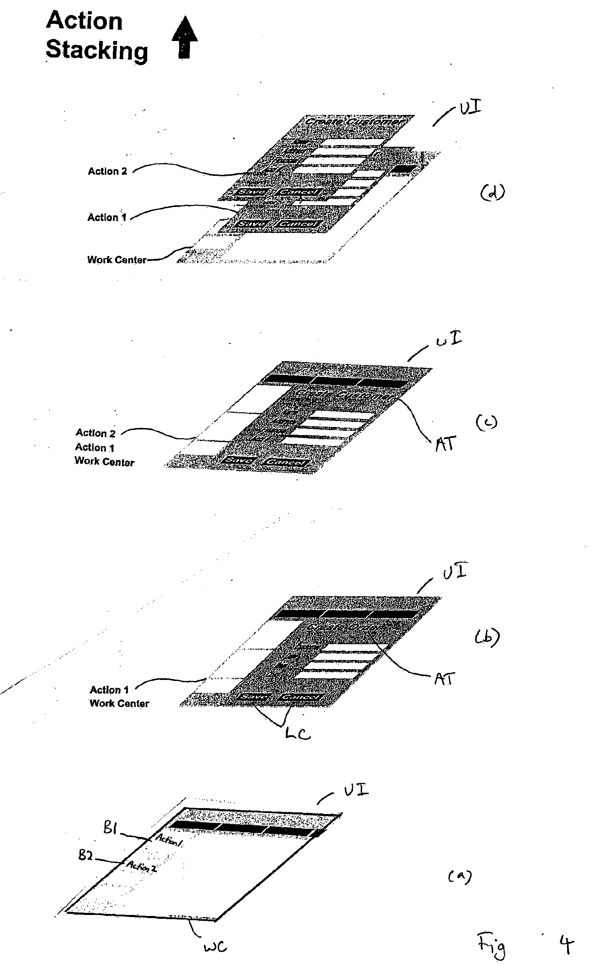

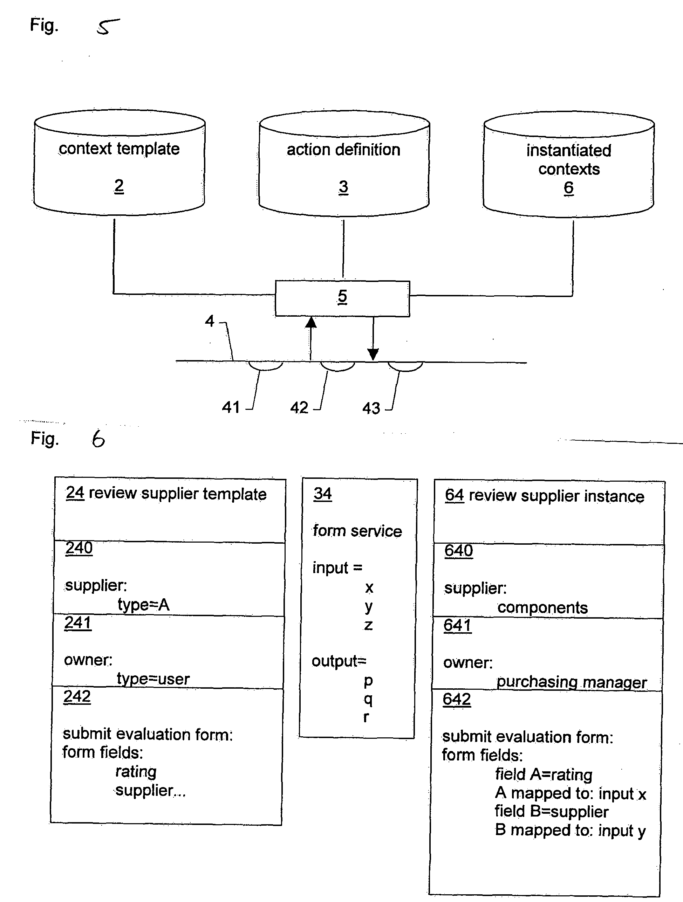

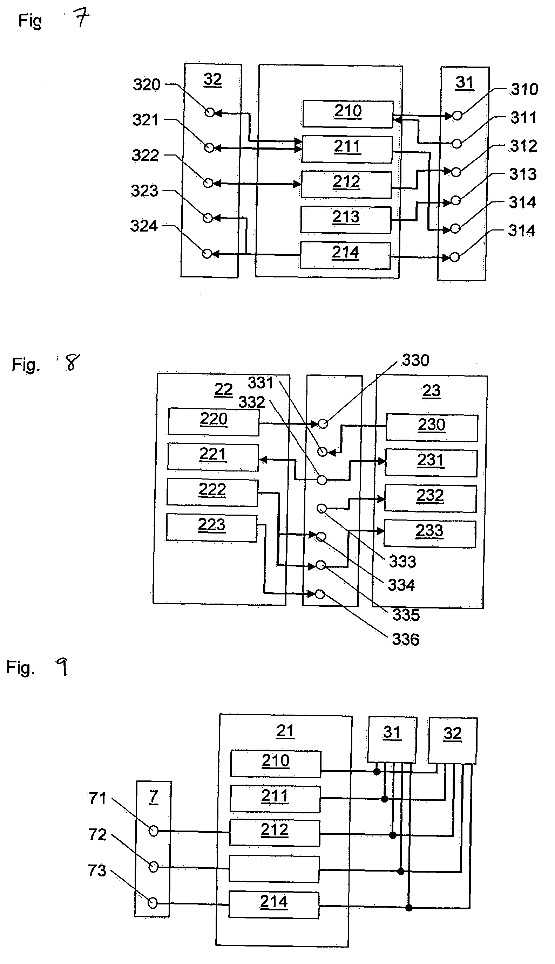

Figure 1shows a schematic drawing illustrating the different end goals presented to a user in a work center according to an embodiment of the invention.

The work center is a place corresponding to the business situation. The work center has a work context, which is the context instantiated in accordance with the business situation. The work center is the starting point SP for the user, and is provided to the user in a user interface. The user interface is generated by a user interface generator in accordance with a user interface template. At the starting point, a plurality of actions g1-g6 are associated with the instantiated context. The plurality of actions g1-g6 are presented to the user in the user interface. The plurality of actions may represent a plurality of end goals g1-g6. The user may wish to complete one or more of the goals. In accordance with an embodiment of the invention, a multi-step contextual action with nested sub-goals is supported within a given context whereby additional context is incrementally added with each step. This may be achieved by implementing a generic context/action based meta data model, and a user interface navigation framework that stacks actions on top of each other and automatically maintains context along the chain of actions.

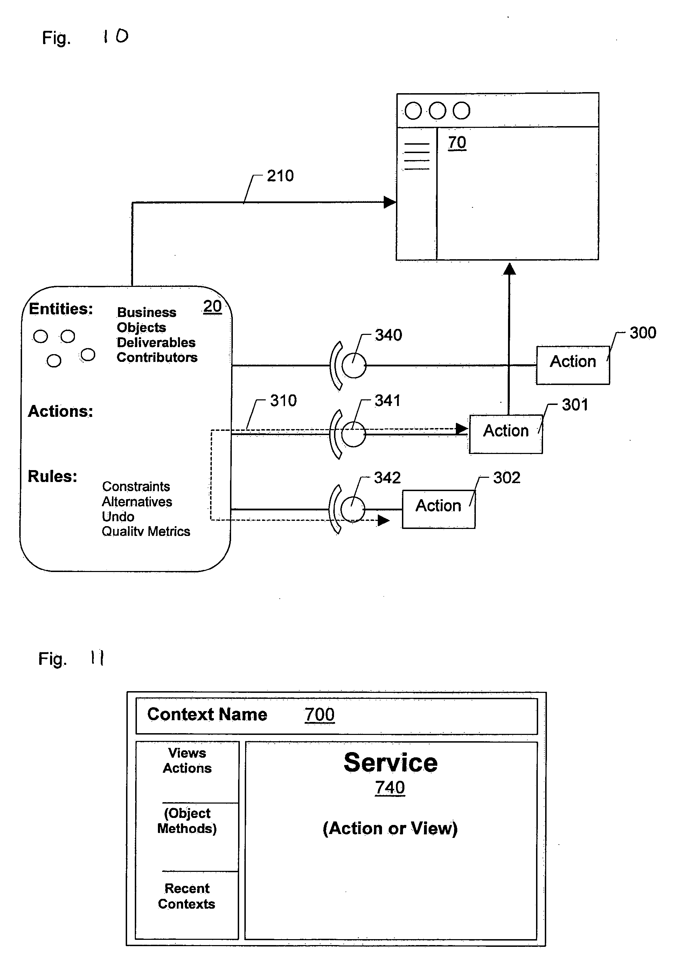

Figure 2 shows a schematic drawing illustrating actions a user may want to do before completing an end goal EG. In the embodiment shown in Figure 2, the user has selected a goal g2. On selecting an end goal (action), a plurality of sub-actions are made available to the user in accordance with the instantiated context. The sub-actions may also be referred to as sub-tasks. The sub-actions 2.1, 2.2, 2.3, 2.4 are contextual actions. In particular, they are actions a user may want to complete before completing the end goal g2. Certain actions 2.3 may include further sub-actions 2.3.1, 2.3.2 that the user may wish to complete. The plurality of actions and sub-actions are portable user interface services. An action may complete a single goal. Contextual information, for example, which business object or procedure a particular sub-action is called from is passed to the sub-action. In one embodiment, the instantiated context includes context data, the context data is passed to the plurality of sub-actions.

The method of adding actions to an open context is called action stacking. An action stack is adding an action on top of the current instantiated context. Actions filter their given context so that additional actions stacked above adopt the filtered context.

Figure 3 shows a schematic drawing illustrating a stack of actions. Figure 3 further shows a user interface UI for providing the stack of actions to the user. Figure 3 further shows a user interface navigation framework UINF for automatically maintaining context through the stack of actions.

In Figure 3 actions 2, 2.3, 2.3.1, 2.3.2 may be services built for work center 1 WC1. Alternatively, they may be services build for another work center, for example, the work center associated with a goal, in the same application. The actions 2, 2.3, 2.3.1, 2.3.2 may be services built for a separate application. In this case, the service may conform to a standard model of context feeding metadata and contextual actions. Actions 2, 2.3, 2.3.1, 2.3.2 are stacked because the source of their instantiation is kept open. In order to complete end goal g2, the user may decide which of the sub-actions he desires to complete. In the embodiment shown in Figure 3, the user has determined, in completing goal g2, that it is desirable to complete pre-requisite 2.3. While completing prerequisite 2.3, the user has also determined that it was desirable to complete pre-requisite 2.3.2. In this way, the user can determine and create their own work flow. The end goal g2 and the desired sub-actions are then stacked on the work center. The end goal g2 and the sub-actions maintain the instantiated context of the work center. Having determined which of the sub-actions 2.3, 2.3.2 the user wishes to complete, the user then completes of cancels the entire action stack above the work center 1 WC1. In order to do so, action level controls are provided. In particular, via the user interface, a control to govern the completion of at least one of the action and sub-action is provided. Action level controls may also be referred to as page level buttons.

Actions may be stacked by clicking on action buttons, for example, links etc. An action may have a name that starts with a verb, for example, "Create", "Edit" etc. As previously described, actions may be a simple action, for example a form. Alternatively, they may be a guided actions, for example, wizard. Guided actions may need to be saved or cancelled. Further, guided actions may include management screens that may be dismissed. As mentioned above, actions adapted the context of the entity they are stacked on. For example, the actions shown in Figure 3 adopt the context of the work center 1 WC1. In particular, an action is a generic modifier that can be applied to any appropriate context without the need to design and build custom user interfaces for the same action in different contexts. Actions are inherently transaction centric.

Action stacking provides a way in which a user can create interactions in an ad-hoc manner depending on their needs in a given context, without needing to script a linear activity.

These types of interactions are goal- driven because they are generated on the fly by the user selecting controls that identify the actions, for example, using verbs, such as "Create", "Edit", etc. In this way, actions and action stacking may be utilized to provide a flexible framework for reusable transactions and user generated interactions for a given context. Further, by providing a methodology of providing links to end goals, not to intermediate steps, as in conventional applications, if intermediate steps are not needed, the user can simply complete the one step and their goal has been obtained. If prerequisites are needed, for example, as shown in Figure 3, in order to complete the end goal g2, then these intermediate, or sub-tasks, can be done from within the context of the original end goal.

Figure 4 shows a further illustration of a stack of actions. Figure 4 (a) shows an example of a work center having an instantiated context. The work center is associated with a business situation. Associated with the context in the work center are a plurality of actions, which may be goals. These actions are displayed to a user in the user interface UI. When a user clicks on an action, for example, a button B1, B2, corresponding to action 1 and action 2, respectively, the screen refreshes in the same browser window, but the context does not change. A behavioral assumption is made that if a user has focused on a given context, any change they elect to do is applied to the current context. With reference to Figure 4(b), a user has selected a button B1 corresponding to action 1. Action 1 is an action to Create Order. The action includes certain fields in which data may be entered, for example, Customer, Date, Item and Cost. The user interface UI for action 1 may also include action level controls. The controls include a save control and a cancel controls. Other controls are envisaged, for example, complete etc. The buttons may also be a text link or an icon. As mentioned above, actions may be denoted by a verb. Action 1 includes the field "Customer". If the situation warrants, for example, if the customer is new, a further sub-action may be stacked on the first action. In this case, with reference to Figure 4(c), the sub-action (action 2) is Create Customer. The sub-action (action 2) may be stacked on top of the existing action 1. These sub-actions (action 2) also adopt the context of any actions lower in the stack.

With reference to Figure 4(d), although the user cannot see it, in the user interface UI, the lower actions in the stack, that is action 1, is kept open, so that when the user completes the top most action, the lower actions are again revealed to the user with the results of completing the higher action. Thus, in the example shown in Figure 4, once the user has created a customer by entering data in the fields: Name, Address, Financial, Account number, the user interface showing action 2 is removed, once the user has saved the data, the user interface for action 1 is again revealed to the user with the customer data complete.

In Fig. 5, a computer system 1 is shown for implementing the business application described above with reference to Figures 1-4. In order to provide an instantiated context, the computer system 1 includes a context template repository 2 and an action repository 3. The computer system further has an interface 4 which is provided with suitable controls 41-43, for implementing a service oriented business application. The interface 4 and the repositories 2,3 are communicatively connected to a processor 5.

In the context template repository 2, context definitions, also referred to as context templates, are stored. The context templates provide meta-data about a context and each context template represents a meta-model of a business situation. The context template defines the structure of the context, possible parameters, how the context and services interact in terms of parameters passing, etc.. The meta-model may define parameters related to a specific work context, such as artefacts used in the work context, actions which can be performed and people involved in the work context or any other suitable parameter.

A context template may e.g. represent an activity-centric meta-model. The context template then provides a meta-model of an activity within an enterprise, such as a role, topic, task, or event in a business situation. Depending on the specific type of activity, certain types of actions and resources may be used in a context and can be pre-configured in the context template. For example, an activity-centric meta-model may define that a user is to be provided with certain information, such as work-lists, work status dashboards, resources, participants, and so on. The context template may for instance be a meta-model of collaborative activities in a business. In such case, the context template may for instance define parameters of a collaborative activity such as the parameters: initiator, participants, actions to be performed, and contain meta-data about these parameters.

For example, the context template may define that the parameter initiator may have listed values only, e.g. of the type 'manager', 'delegate', etc..

The context template may for example represent an object-centric meta-model. The context template then provides a meta-model which is centred around an object in a business situation. For instance, the context template may be a meta-model of a business situation centred around a certain job. The context template may include object related operations as well as views on all facets on the object. Different job roles may be interested in different facets of the same object type.

The context template may for example represent a process-centric meta-model. The context template then provides a meta-model of a workflow in a business situation. Most actions are executed as predefined process steps. Because of the nature of workflow, selected steps may be owned by different users. The context template may then define, e.g., that a process has an initiator, and types of participants, which steps are to be performed by which types of participants, etc. The context template may further define that an initiator is of a type with a certain role in an enterprise, that the participants have a certain position within the enterprise etc.

When implementing a business application, a context template can be selected. The context template can then be instantiated, creating a context instance. When the context template is instantiated, an object which has the structure and parameters defined by the context template is created and values are assigned to the parameters. The instantiated context further represents a model of a business situation which conforms to the meta-model represented by the context template.

Fig. 6 for example schematically illustrates a supplier review context template 24. The supplier review context template 24 represents an activity centric meta-model. In the example of fig. 6, the activity around which the template 24 is centred is a review of a supplier. The context template 24 provides a meta-model of a review activity, and e.g. defines that such a model of a review process has parameters 241,242 of a certain type. E.g. in this example that an model of the type 'supplier review' has a 'supplier' parameter 240 of a type A, and an 'owner' parameter of type 'user' etc.. The shown example of a context template 24 further defines that a review model uses certain services. In this example, the context template 24 defines an activity model of the type 'supplier review' requires submitting an evaluation form with certain fields.

E.g. in this example, the context template 24 contains a service definition 242 which, inter alia, defines a form with form fields 'rating' and 'supplier'.

In the action repository 3, one or more action definitions are stored. The action definition contains at least a definition of the inputs and outputs of the action, i.e. the actions definition defines at least the input/output interface of an action. However, the action definition may also contain other information about an action, such as which other actions can be associated with the action, what the functionality of the action or other suitable information.

In fig. 6, for instance, an action definition 34 is shown which defines inputs x,y, and z and outputs p,q and r of a form processing service. When implementing a business application which assists users in performing a review activity, the context template 24 is selected and instantiated resulting in a supplier review context instance 64. The supplier review context instance 64 has the parameters and structure defined by the context template 24, and values are assigned to the parameters. The supplier review context instance 64 represents a model of a business situation which conforms with the meta-model represented by the context template 24.

In this example, e.g. the supplier review context instance 64 provides a model how a supplier review process is performed. For example, the supplier review context instance 64 models that in a business environment, the review process is owned by a purchasing manager, and that a supplier of components is reviewed. The supplier review context instance 64 further models that in the review process, an evaluation form is submitted of which field A represents the supplier rating and field B represents an identification of the supplier.

When implementing the business application, one or more action definitions may be selected from the action repository 3 via the interface. The selected action definition is associated with the instantiated context. At least one parameter of the instantiated context is mapped with one or more input or output parameters of the selected action definition. At run time of the business application, a action in accordance with the action definition is called from the context. The action then executes services, i.e. performs procedures or functions hosted on a computer server, and may e.g. return status information and result parameters to the context, generated a new context or perform other suitable functions.

For instance in the example of fig. 6, during implementation of the business application, the parameters of the evaluation form of the instance 64 are mapped to inputs of the form service definition 34.

In this example, field A is mapped to input x, and field B is mapped to input y. The mapping is stored in the supplier review context instance 64, as shown in form field 642 of the supplier review context instance 64.

Fig. 3 illustrates a mapping of parameters of an instantiated context to input or output parameters of an action definition. An action definition may define that a certain service has inputs 311-315 and has an output 310 as for example shown in fig. 3. The parameters 210-214 of the instantiated context may then be mapped to the inputs 311-315 and the output 310. As shown in the example, parameters 210-214 are each mapped to a different one of inputs 311-315, and the output 310 is mapped to parameter 210. For another action definition 32, the parameters may be mapped differently, for example as shown in fig. 7.

Thus, in the example of fig. 7, in case the implemented business application is run on a suitable apparatus, a service in accordance with the action definition 31 will receive input data from parameters 210-214 via inputs 311-315, and output data to the instantiated context 21 via output 310. This output data will be received by a parameter of a context corresponding to parameter 210. The output of the service corresponding to the action definition 32 is thus provided to the context 21, which is modified thereby. The other action definition 32 can then use the modified context 21 to obtain input and/or to output data. In this example, the context 21 thus operates as a data exchange fabric for two or more actions. Accordingly, the necessity to match the input/output interfaces of the different services to each other is obviated and data can be transferred in a simple manner from one service to another service.

In the example of fig. 7, the inputs and/or outputs of the action definitions 31,32 are mapped to parameters of one context 21. However, it is also possible that when implementing a business application, inputs and/or outputs of an action definition are mapped to two or more contexts, e.g. as shown for example in fig. 8. In fig. 8 instantiated contexts 22,23. At run time, one of the contexts 22,23 can be selected and the selected context 22 can interact with actions according to the action definitions associated with the selected context.

As schematically shown in fig. 9, one ore more parameters of the instantiated context can be coupled to a user-interface definition 7. In fig. 9, the context 21 and the actions definitions 31,32 shown in fig.6 are shown, and the parameters 212-214 are coupled to respective inputs 71-73 of a user-interface (UI) definition.

The user-interface definition defines a UI corresponding to the definition 7. The UI definition 7 may for example define a template for a graphical user interface (GUI), such as which windows will be present in the GUI, what type of information has to be displayed in the windows etc.. Thus, the parameters 212-214 coupled to the inputs 71-73 of the UI definition 7 are outputted in a UI of a computer system when the business application is running on the computer system.

Fig. 10 schematically shows an example of a system on which an implemented business application is running. The system is provided with an instantiated context 20. When the business application is run, the parameters of the model represented by the instantiated context 20 are given values, such that the model represents an actual situation in a business environment. E.g. in the instantiated context 64 shown in fig. 6, the supplier is given a name of an actual supplier of components, the owner is given a value representing an employee of an enterprise etc.

As indicated with the line 201 the context is connected to a user-interface, in this example a GUI 70. Parameters of the context 20 have been mapped to the inputs of a UI definition during implementation of the business application. The GUI 70 conforms with the UI definition 7. Thus, when the implemented business application is running, parameters of the context 20 are coupled to the GUI 70 and parameters of the contexts 20 can be outputted visually in the GUI 70. Thereby, a user can perceive a current state of the context 20, for example which persons are contributed in the specific context, which actions can be performed in the context etc.

The contexts 20,21 are further connected to actions 300-302 via plug-and play interfaces 340-345. During implementation, for parameters of the instantiated context are mapped to inputs and or outputs of action definitions. The actions 300-302 conform with these action definitions. Thus, for each respective actions 300-302 , the contexts are immediately ready to receive or send data to the actions 300-302 when the business application is run.

In this example, as indicated with the dashed lines 301,311 the actions can exchange data via the context 2. To that end, the context 20 is connected to more than one action in a manner as explained above with reference to fig. 7. For example, a first action 300 can for example output data to the context 20, thus modifying the context 20. A second action 301 can use parameters from the modified context, and thus receive data from the first action 300.

Since the communication of data between the actions is lead via the context, the interfaces of the actions do not have to be matched to each other.

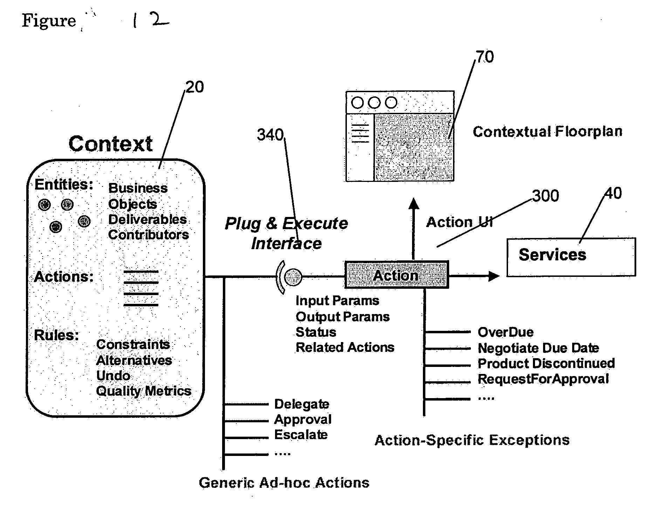

Figure 11 schematically shows a block diagram of a Graphical User Interface suitable for in the example of figure 9.

The GUI has a context information window 700 in which information about the current context is displayed. In this example in the context information window 700 the name of the current context is visually outputted. However, the context information window 700 may likewise contain other suitable information about the current context.

The GUI 70 further has a control window provided with controls 710,711,720 and 730. An action control 710 allows a user of the system to view actions linked to the current context. For example, the action control 710 can provide the user with a sequence of actions used to perform successive steps in a business process related to the current context. Via a view control 711, a user can select a view of the current context. For example, by selecting the view control, a list of participant in the current context is outputted in the service window 740 or any other suitable parameter of the current context. An object/method control 720 allows a user to control or select objects or methods of the current context. A recent context control 730 visually outputs which contexts have been used recently, and allows a user to select one of the recently used contexts.

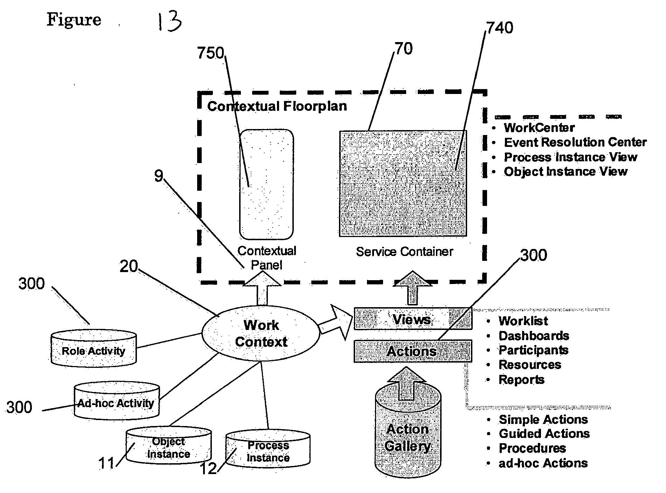

The context definitions include at least one of: types of participants, status data and actions associated with the business state. The context template may for example include one or more of the following: slots, inferred variables, actions, rules and contextual floorplans, as will be explained below in more detail. Slots are variables that are initialized upon instantiation of the context out of the business context. Turning to Figure 12 there is shown a schematic drawing of an action and its connection to a specific work context. An action 300 is instantiated providing an interface 340 to a work context 20. The action 300 activates one or more generic services, preferably web services, wherein a predefined number of data objects are handled in the work context 20. In this respect it can be said that an action may be viewed as a context aware service: it functions as a wrapping layer that executes the service while providing the service of the appropriate context data. As can be seen in the drawing the action 300 is preferably designed to have a plug & execute interface 340 which may be described as a generic data-interface through which data exchange is possible from the context to the action. In this way actions can be re-used as task building blocks in any context.

In particular, actions are atomic tasks or particular instances of work that a user performs in a given work context 20 or steps that users must execute in a process. Depending on the complexity of the Action a user interface 340 is provided different wherein Action patterns are provided by the user interface framework. In this way, a user centric interface is provided where for a user, actions are perceived as a single task from within the current context. The detailed design of the user interface 70 is determined by the task that is executed. The general appearance is defined by an user interface generator (not depicted).

### Several Action types can be distinguished:

Simple Actions. Such Actions are supported by one single screen that can be launched within a context next to the Contextual Panel.

Guided Actions. Such Actions require a multiple screens sequence that models the task or interaction flow needed to perform this Action. A wizard like roadmap component guides the user through all steps.

Quick Actions. This Action type is not launched in-place within an active context but rather when opening a pushed notification or work item. The Quick Action is a kind of interactive workflow message that provides an explanation of the trigger as well as the user interface required to respond to this work item.

In the user interface 70 a Contextual Action Bar may be provided which supports the display of response options provided by the work item. Those are typically workflow options like "yes", "no", "reject", "reply", "delegate".

There are also other task management options provided such as "prioritize", "add to My Lists", "Open related work context", transform into a procedure or ad-hoc Activity, and so forth.

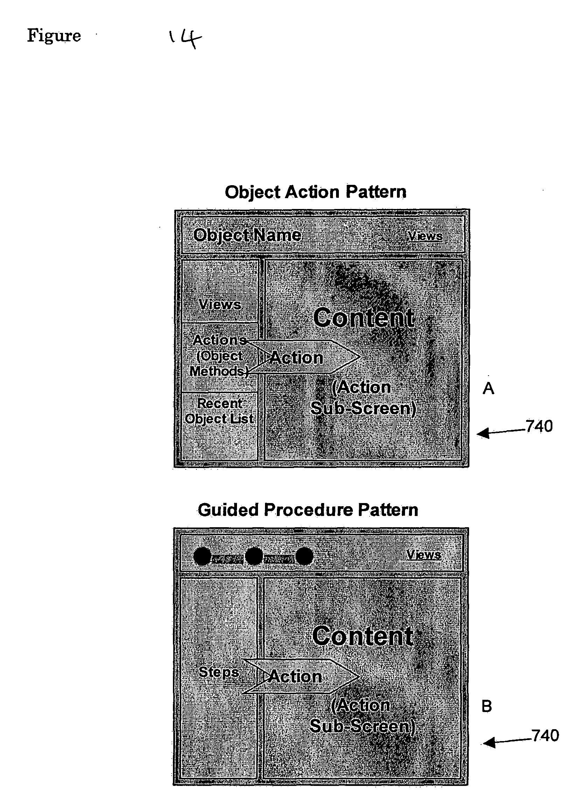

Figure 13 shows a specific layout for a user interface 70 that provides an action interface as previously described. This layout is called "Contextual Floorplans". All screens that cover more than a single action are designed as a place to do work. ― they include many different functions and views all supporting one coherent activity. The general page layout for such places is called Contextual Floorplan and consists of a left hand Contextual Panel for navigation, and a right hand container for launching services in-place. Those in-place actions enable the user to perform actions without leaving the current work context 20. Depending on the user focus the context may represent a role-specific activity or a specific work instance like a workflow or business object. In the contextual floorplan 70 a "contextual panel" 1 is present and a "service container" 740. The contextual panel 750 has been designed to provide the most important functionality and navigation within the current working context. The Contextual Panel 750 typically offers a list of views or facets on the current work context 20 and a list of related actions.

The Contextual Panel 750 may provide view switches to select different facets of the current work context 20. They are basically a toolset to divide complex function into several intuitive chunks. The switches navigate between different views 9 of the same context. Each view, when activated, may replace subordinate content in the Context Panel 750, so that this panel is changed to show for example different related actions. Although the same generic control and layout is used, the exact semantics vary depending on the type of work context 20.

Activity-centric Views 10: Views on this level represent generic perspectives on work. Such Views are focused on one particular work role. They also may represent secondary activity centers that require their own set of actions.

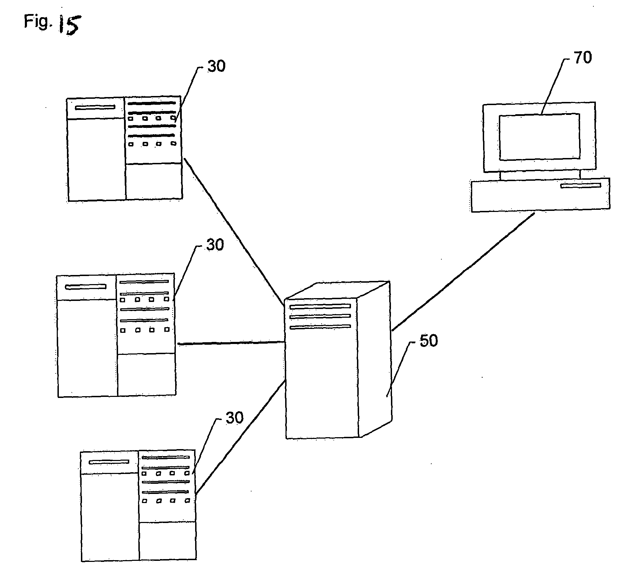

Object-centric Views 11: Facets on this level represent different views on a given business object. They entirely depend on the type of object and reflect natural perspectives on that object. Each perspective may come with its own set of actions and by that represents a little activity center with focus on one concrete business object instance. Reference is made to Figure 14A.

Process Instance Views 12: On this level, facets are mainly generic process tracking and execution views provided by the Guided Procedure framework as will be explained further below. Those views can be extended by tailored views depending on the semantics of the procedure. Reference is made to Figure 14B.

Figure 14 shows as an example user interfaces which are dependent on a typical work context view. Figure 14A shows an Object centric view, wherein a Service container 740 is presented to provide specific actions on business objects provided by the work context. Figure 14B shows a process centric view, where an action is presented to perform a specific step in a typical guided procedure. Typically in a Guided Procedure project processes are modeled by integrating existing and newly implemented services into a coherent procedure. In this way the workflow as experienced by this user; whether the user is the owner of the process, or at least this part of it; the work objects managed by the process. Guided Procedures support collaboration amongst multiple users all working towards a common goal, each contributing their share. UI elements of the Guided Procedure allow for navigation through the process, indicate the status of the process, and provide different views on the process.

Figure 15 schematically shows a computer network suitable for running a business application shown. The computer network includes a number, in this example three, server systems 30. Each of these server systems 30 is communicatively connected to a context server 50. On the server systems 30 a set of procedures or functions are hosted which provide an action to the context server 50. The context server 50 can request data from the computer server, by submitting a set of parameters to the set of procedures or functions on the server. On the server 50 two or more contexts are present, and the server 50 is arranged to submit parameters of a selected context to the actions provided by the server systems 30 or to receive data from the server systems and adjust the selected context in correspondence with the received data. The context service 50 is further connected to a computer system provided with a GUI 70 on which aspects of the selected context and/or the actions can be outputted visually, as explained with reference to fig. 10.

The invention may also be embodied in a toolkit for implementing a business application. The toolkit may have a context repository in which at least two context templates are stored, each of the context templates defining actors in a work context. The toolkit may further have an action repository in which at least two action templates are stored, which action templates define at least an input or output of a service. The toolkit may further have a context instantiation component for instantiating a context based on a context template stored in the context repository. The toolkit may further have an action association component for associating at least one action template with the instantiated context. The toolkit may further have a mapping component for mapping at least one parameter of the instantiated context with at least one input or output of the associated action templates, for using the parameter as input to the service or outputting data from the service to the parameter when the business application is running.

The invention may also be embodied in a computer system provided with a toolkit, the computer system comprising at least one memory in which the context repository and the action repository are stored, and at least one processor communicatively connected to the memory, the at least one processor including the context instantiation component, the action association component and the mapping component. A computer (system) includes any type of programmable apparatus such as a desktop computer, a personal digital assistant, a (mobile) telephone or any other suitable type of programmable device. A computer (system) may include one or more of such devices communicatively connected in a suitable manner. To provide for interaction with a user, a computer system can be used having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.

The invention may also be embodied in a business application, including a computer program product with code portions representing at least one instantiated context based on a context template stored in a context repository; and representing at least one input/output interface for transferring data from the instantiated context to an associated service or vice versa, wherein at least one parameter of the instantiated context is connected to the input/output interface, for inputting the aspect to the service or outputting data from the service to the aspect when the business application is running on a computer.

It should be noted that the above-mentioned embodiments illustrate rather than limit the invention, and that those skilled in the art will be able to design alternatives without departing from the scope of the appended claims. For example, the computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output.

Also, for example, the parameter and/or inputs and/or outputs of the contexts and action definitions described in figs. 6 and 7 may be mapped differently depending on the specific implementation.

The mere fact that certain measures are recited in mutually different claims does not indicate that a combination of these measures cannot be used to advantage.

## Claims

1. A computer implemented method for implementing a business application on a computer system, the computer system including:
a context repository in which at least two context templates are stored, each of the context templates representing a meta-model of a business situation;
an action repository in which at least two actions are stored having respective action definitions, the method including:
instantiating a context, in response to the business situation, based on a context template stored in the context repository, such that the instantiated context is a model of the business situation;
associating at least one action with the instantiated context;
generating a user interface based on an interface template, wherein the interface provides the at least one action to a user, based on the instantiated context, wherein the at least one action adopts the instantiated context; in response to a user's selection of one of the at least one action, providing to the user a plurality of sub-actions the user may want to perform before completing the one action, and
adding the plurality of sub-actions to the instantiated context, wherein the sub-actions adopt the instantiated context.

2. A method according to claim 1, including:
filtering the instantiated context associated with the one or more action, so that the plurality of sub-actions added adopt the filtered context.

3. A method according to claim 1, including providing, via the user interface, a control to govern the completion of at least one of the action and sub-action.

4. A method according to claim 1, wherein the plurality of actions and sub-actions are portable user interface services.

5. A method according to claim 1, wherein the plurality of actions are a plurality of related goals, respectively and wherein the plurality of sub-actions are a plurality of related sub-tasks, respectively.

6. A method according to claim 5, wherein the plurality of sub-tasks are contextual actions which the user may perform before completing the goal.

7. A method according to claim 1, wherein the instantiated context includes context data, the method including passing the context data to the plurality of sub-actions.

8. A method according to claim 1, including generating the user interface so that the plurality of sub-actions are stacked on the selected action.

9. A method according to claim 8, including a user interface navigation framework for automatically maintaining context through the stack of actions.

10. A method according to claim 1, wherein additional context is incrementally added with each sub-task.

11. A method according to claim 1, wherein the sub-action is provided as a possible action that the user may wish to or needs to complete before successfully completing the action.

12. A computer program product, including code portions for performing a method according to any one of claims 1-11 when running on a computer.

13. A business application, including a computer program product with code portions representing at least one instantiated context which instantiated context represents a business situation, the code portions further representing at least one input/output interface for transferring data from the instantiated context to an associated action or vice versa, the code portions further representing the generation of a user interface based on an interface template, wherein the interface provides the associated action to a user, based on the instantiated context, wherein the at least one action adopts the instantiated context; the code portions further representing, in response to a user's selection of one of the at least one action, a provision to the user of a plurality of sub-actions the user may want to perform before completing the one associated action, and the code portions further representing the addition of the plurality of sub-actions to the instantiated context, wherein the sub-actions adopt the instantiated context, when the business application is running on a computer.

14. A computer system, provided with a business application according to claim 13.

15. A computer network including at least one computer system according to claim 14 and at least one action server connected to the computer system for providing an action in accordance with an action definition associated with a context on the computer system.
